# EUROPÄISCHE PATENTSCHRIFT

(11) **EP 0 931 456 B1**
(45) Veröffentlichungstag und Bekanntmachung des Hinweises auf die Patenterteilung: **02.04.2003**
(21) Anmeldenummer: 99100891.3
(22) Anmeldetag: 19.01.1999
(51) Int. Cl.: A01N 47/38

(54) **Herbizides Mittel**
Herbicidal composition
Composition herbicide

(30) Priorität: 21.01.1998 CH 13598
(43) Veröffentlichungstag der Anmeldung: 28.07.1999
(60) Teilanmeldung: 02026750.6
(73) Patentinhaber: Syngenta Participations AG, 4058 Basel (CH)
(72) Erfinder: Cornes, Derek, 4123 Allschwill (CH); Glock, Jutta, 4322 Mumpf (CH)

(56) Entgegenhaltungen:
- EP-A- 0 507 171

## Beschreibung

Die vorliegende Erfindung betrifft neue selektiv-herbizide Mittel zur Bekämpfung von Gräsern und Unkräutern in Kulturen von Nutzpflanzen, insbesondere in Kulturen von Getreide und Reis, welche ein Herbizid und einen Safener (Gegenmittel, Antidot) enthalten und welche die Nutzpflanzen, nicht aber die Unkräuter vor der phytotoxischen Wirkung des Herbizides bewahren, sowie die Verwendung dieses Mittels zur Unkrautbekämpfung in Nutzpflanzenkulturen.

Beim Einsatz von Herbiziden können z.B. in Abhängigkeit von der Dosis des Herbizids und der Applikationsart, der Kulturpflanze, der Bodenbeschaffenheit und den klimatischen Bedingungen, wie Belichtungsdauer, Temperatur und Niederschlagsmengen auch die Kulturpflanzen in erheblichem Maße geschädigt werden.

Um diesem und ähnlichen Problemen zu begegnen, sind schon verschiedene Stoffe als Safener vorgeschlagen worden, welche befähigt sind, die schädigende Wirkung des Herbizids auf die Kulturpflanze zu antagonisieren, das heißt, die Kulturpflanze davor zu schützen, wobei aber die Herbizidwirkung auf die zu bekämpfenden Unkräuter praktisch nicht beeinträchtigt wird. Dabei hat es sich gezeigt, daß die vorgeschlagenen Safener sowohl bezüglich der Kulturpflanzen als auch bezüglich des Herbizids und teilweise auch in Abhängigkeit von der Applikationsart oft sehr spezifisch wirken, das heißt, ein bestimmter Safener eignet sich oft nur für eine bestimmte Kulturpflanze und eine spezielle Herbizidstoffklasse oder ein bestimmtes Herbizid. So sind z.B. aus WO 97/18712 Verbindungen bekannt, die Kulturpflanzen vor der phytotoxischen Wirkung von speziellen Herbiziden schützen. Es wurde nun gefunden, daß sich Verbindungen der Formel llc 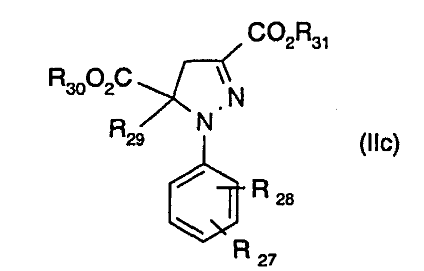 worin die Substituenten die unten genannten Bedeutungen besitzen, zum Schützen von Kulturpflanzen vor der phytotoxischen Wirkung der Verbindung der Formel I 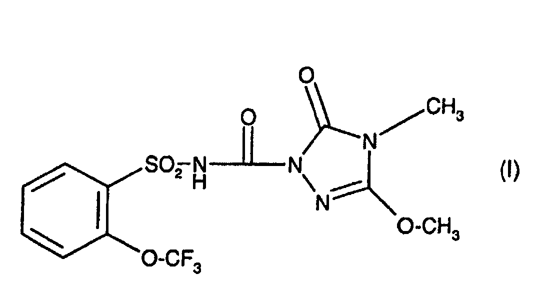 eignen.

Erfindungsgemäß wird somit ein selektiv-herbizides Mittel vorgeschlagen, welches dadurch gekennzeichnet ist, daß es neben üblichen inerten Formulierungshilfsmitteln wie Trägerstoffen, Lösungsmitteln und Netzmitteln als Wirkstoff eine Mischung aus
a) einer herbizid-wirksamen Menge des Herbizids der Formel I 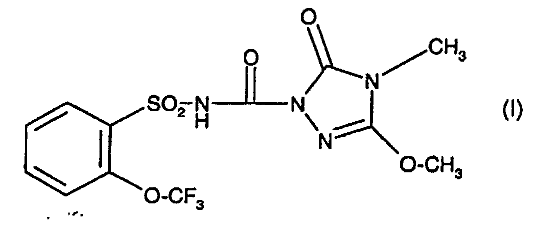 und
b) einer herbizid-antagonistisch wirksamen Menge eines Safeners der Formel IIc 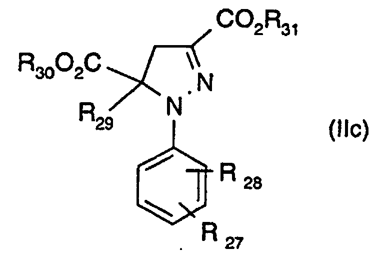
worin R₂₇ und R₂₈ unabhängig voneinander Wasserstoff oder Halogen und
R₂₉, R₃₀ und R₃₁ unabhängig voneinander C₁-C₄-Alkyl bedeuten; enthält.

Die in den Substituentendefinitionen vorkommenden Alkylgruppen können geradkettig oder verzweigt sein und stehen beispielsweise für Methyl, Ethyl, Propyl oder Butyl sowie deren verzweigte Isomeren. Halogen bedeutet in der Regel Fluor, Chlor, Brom oder Jod, vorzugsweise Fluor, Chlor oder Brom.

Die Verbindung der Formel I ist in der EP-A-0 507 171 beschrieben. Verbindungen der Formeln llc sind aus WO 97/18712 bekannt.

Besonders bevorzugte Verbindungen der Formel llc sind in der folgenden Tabelle aufgeführt:

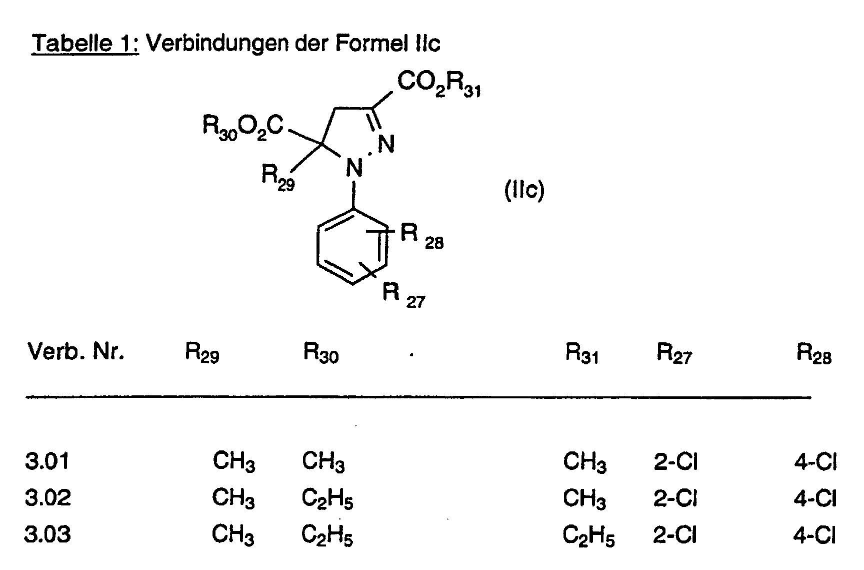

Die Erfindung betrifft auch ein Verfahren zum selektiven Bekämpfen von Unkräutern und Gräsern in Nutzpflanzenkulturen, welches darin besteht, daß man die Nutzpflanzen, deren Samen oder Stecklinge oder deren Anbaufläche gleichzeitig oder getrennt mit einer herbizid wirksamen Menge des Herbizids der Formel I und einer herbizid-antagonistisch wirksamen Menge des Safeners der Formel llc behandelt.

Als Kulturpflanzen, welche durch die Safener der Formel IIc gegen die schädigende Wirkung der oben erwähnten Herbizide geschützt werden können, kommen insbesondere Getreide und Reis in Betracht. Unter Kulturen sind auch solche zu verstehen, die durch konventionelle züchterische oder gentechnologische Methoden gegen Herbizide bzw. Herbizidklassen tolerant gemacht worden sind.

Bei den zu bekämpfenden Unkräutern kann es sich sowohl um monokotyle wie um dikotyle Unkräuter handeln, wie zum Beispiel Stellaria, Nasturtium, Agrostis, Digitaria, Avena, Setaria, Sinapis, Lolium, Solanum, Echinochloa, Scirpus, Monochoria, Sagittaria, Bromus, Alopecurus, Sorghum halepense, Rottboellia, Cyperus, Abutilon, Sida, Xanthium, Amaranthus, Chenopodium, Ipomoea, Chrysanthemum, Galium, Viola und Veronica.

Als Anbauflächen gelten die bereits mit den Kulturpflanzen bewachsenen oder mit dem Saatgut dieser Kulturpflanzen beschickten Bodenareale wie auch die zur Bebauung mit diesen Kulturpflanzen bestimmten Böden.

Ein Safener der Formel II kann je nach Anwendungszweck zur Vorbehandlung des Saatgutes der Kulturpflanze (Beizung des Samens oder der Stecklinge) eingesetzt oder vor oder nach der Saat in den Boden gegeben werden. Er kann aber auch für sich allein oder zusammen mit dem Herbizid nach dem Auflaufen der Pflanzen appliziert werden. Die Behandlung der Pflanzen oder des Saatgutes mit dem Safener kann daher grundsätzlich unabhängig vom Zeitpunkt der Applikation des Herbizids erfolgen. Die Behandlung der Pflanze kann man jedoch auch durch gleichzeitige Applikation von Herbizid und Safener (z.B. als Tankmischung) vornehmen. Die zu applizierende Aufwandmenge Safener zu Herbizid richtet sich weitgehend nach der Anwendungsart. Bei einer Feldbehandlung, welche entweder unter Verwendung einer Tankmischung mit einer Kombination von Safener und Herbizid oder durch getrennte Applikation von Safener und Herbizid erfolgt, liegt in der Regel ein Verhältnis von Herbizid zu Safener von 1:100 bis 1:1, bevorzugt 1:50 bis 5:1.

In der Regel werden bei der Feldbehandlung 0,001 bis 5,0 kg Safener/ha, vorzugsweise 0,001 bis 0,5 kg Safener/ha, appliziert.

Die Aufwandmengen an Herbizid liegt in der Regel zwischen 0,001 bis 2 kg/ha, vorzugsweise jedoch zwischen 0,005 bis 1 kg/ha.

Die erfindungsgemäßen Mittel sind für alle in der Landwirtschaft üblichen Applikationsmethoden wie z.B. preemergente Applikation, postemergente Applikation und Saatbeizung geeignet.

Bei der Samenbeizung werden im allgemeinen 0,001 bis 10 g Safener/kg Samen, vorzugsweise 0,05 bis 2 g Safener/kg Samen, appliziert. Wird der Safener in flüssiger Form kurz vor der Aussaat unter Samenquellung appliziert, so werden zweckmäßigerweise Safenerlösungen verwendet, welche den Wirkstoff in einer Konzentration von 1 bis 10000, vorzugsweise von 100 bis 1000 ppm, enthalten.

Zur Applikation werden die Safener der Formel II oder Kombinationen von diesen Safenern mit den Herbiziden der Formel I zweckmäßigerweise zusammen mit den in der Formulierungstechnik üblichen Hilfsmitteln zu Formulierungen verarbeitet, z.B. zu Emulsionskonzentraten, streichfähigen Pasten, direkt versprühbaren oder verdünnbaren Lösungen, verdünnten Emulsionen, Spritzpulvern, löslichen Pulvern, Stäubemitteln, Granulaten oder Mikrokapseln.

Die Formulierungen werden in bekannter Weise hergestellt, z.B. durch inniges Vermischen und/oder Vermahlen der Wirkstoffe mit flüssigen oder festen Formulierungshilfsmitteln wie z.B. Lösungsmitteln oder festen Trägerstoffen. Ferner können zusätzlich oberflächenaktive Verbindungen (Tenside) bei der Herstellung der Formulierungen verwendet werden.

Als oberflächenaktive Verbindungen kommen je nach der Art des zu formulierenden Wirkstoffes der Formel I nichtionogene, kation- und/oder anionaktive Tenside und Tensidgemische mit guten Emulgier-, Dispergier- und Netzeigenschaften in Betracht.

Ferner sind auch die in der Formulierungstechnik gebräuchlichen Tenside, die u.a. in "Mc Cutcheon's Detergents and Emulsifiers Annual" MC Publishing Corp., Ridgewood New Jersey, 1981, Stache, H., "Tensid-Taschenbuch", Carl Hanser Verlag, München/Wien, 1981 und M. und J. Ash, "Encyclopedia of Surfactants", Vol I-III, Chemical Publishing Co., New York, 1980-81 beschrieben sind, zur Herstellung der erfindungsgemäßen herbiziden Mittel geeignet.

Die herbiziden Formulierungen enthalten in der Regel 0,1 bis 99 Gew%, insbesondere 0,1 bis 95 Gew.-% Wirkstoffgemisch aus der Verbindung der Formel I mit den Verbindungen der Formel llc, 1 bis 99,9 Gew.% eines festen oder flüssigen Formulierungshilfstoffes und 0 bis 25 Gew.%, insbesondere 0,1 bis 25 Gew.% eines Tensides.

Während als Handelsware üblicherweise konzentrierte Mittel bevorzugt werden, verwendet der Endverbraucher in der Regel verdünnte Mittel.

Die Mittel können auch weitere Zusätze wie Stabilisatoren z.B. gegebenenfalls epoxydierte Pflanzenöle (epoxydiertes Kokosnußöl, Rapsöl oder Sojaöl), Entschäumer, z.B. Silikonöl, Konservierungsmittel, Viskositätsregulatoren, Bindemittel, Haftmittel sowie Dünger oder andere Wirkstoffe enthalten. Für die Verwendung von Safenern der Formel II oder sie enthaltender Mittel zum Schützen von Kulturpflanzen gegen schädigende Wirkungen von Herbiziden der Formell kommen verschiedene Methoden und Techniken in Betracht, wie beispielsweise die folgenden:

### i) Samenbeizung

a) Beizung der Samen mit einem als Spritzpulver formulierten Wirkstoff der Formel II durch Schütteln in einem Gefäß bis zur gleichmäßigen Verteilung auf der Samenoberfläche (Trockenbeizung). Man verwendet dabei etwa 1 bis 500 g Wirkstoff der Formel llc (4 g bis 2 kg Spritzpulver) pro 100 kg Saatgut.
b) Beizung der Samen mit einem Emulsionskonzentrat des Wirkstoffs der Formel llc nach der Methode a) (Naßbeizung).
c) Beizung durch Tauchen des Saatguts in eine Brühe mit 100-1000 ppm Wirkstoff der Formel llc während 1 bis 72 Stunden und gegebenenfalls nachfolgendes Trocknen der Samen (Tauchbeizung).

Die Beizung des Saatguts oder die Behandlung des angekeimten Sämlings sind naturgemäß die bevorzugten Methoden der Applikation, weil die Wirkstoffbehandlung vollständig auf die Zielkultur gerichtet ist. Man verwendet in der Regel 1 bis 1000 g Antidot, vorzugsweise 5 bis 250 g Antidot, pro 100 kg Saatgut, wobei man je nach Methodik, die auch den Zusatz anderer Wirkstoffe oder Mikronährstoffe ermöglicht, von den angegebenen Grenzkonzentrationen nach oben oder unten abweichen kann (Wiederholungsbeize).

### ii) Applikation als Tankmischung

Eine flüssige Aufarbeitung eines Gemisches von Antidot und Herbizid (gegenseitiges Mengenverhältnis zwischen 10:1 und 1:100) wird verwendet, wobei die Aufwandmenge an Herbizid 0,005 bis 5,0 kg pro Hektar beträgt. Solche Tankmischungen werden vor oder nach der Aussaat appliziert.

### iii) Applikation in der Saatfurche

Der Wirkstoff der Formel llc wird als Emulsionskonzentrat, Spritzpulver oder als Granulat in die offene besäte Saatfurche eingebracht. Nach dem Decken der Saatfurche wird in üblicher Weise das Herbizid im Vorauflaufverfahren appliziert.

### iv) Kontrollierte Wirkstoffabgabe

Der Wirkstoff der Formel llc wird in Lösung auf mineralische Granulatträger oder polymerisierte Granulate (Harnstoff/Formaldehyd) aufgezogen und getrocknet.

Gegebenenfalls kann ein Überzug aufgebracht werden (Umhüllungsgranulate), der es erlaubt, den Wirkstoff über einen bestimmten Zeitraum dosiert abzugeben.

Insbesondere setzen sich bevorzugte Formulierungen folgendermaßen zusammen: (% = Gewichtsprozent)

| Emulgierbare Konzentrate: | |
|---|---|
| Aktives Wirkstoffgemisch | 1 bis 90 %, vorzugsweise 5 bis 20 % |
| oberflächenaktives Mittel | 1 bis 30 %, vorzugsweise 10 bis 20 % |
| flüssiges Trägermittel | 5 bis 94 %, vorzugsweise 70 bis 85 % |

| Stäube: | |
|---|---|
| Aktives Wirkstoffgemisch | 0,1 bis 10 %, vorzugsweise 0,1 bis 5 % |
| festes Trägermittel | 99,9 bis 90 %, vorzugsweise 99,9 bis 99 % |

| Suspensions-Konzentrate: | |
|---|---|
| Aktives Wirkstoffgemisch | 5 bis 75 %, vorzugsweise 10 bis 50 % |
| Wasser | 94 bis 24 %, vorzugsweise 88 bis 30 % |
| oberflächenaktives Mittel | 1 bis 40 %, vorzugsweise 2 bis 30 % |

| Benetzbare Pulver: | |
|---|---|
| Aktives Wirkstoffgemisch | 0,5 bis 90 %, vorzugsweise 1 bis 80 % |
| oberflächenaktives Mittel | 0,5 bis 20 %, vorzugsweise 1 bis 15 % |
| festes Trägermaterial | 5 bis 95 %, vorzugsweise 15 bis 90 % |

| Granulate: | |
|---|---|
| Aktives Wirkstoffgemisch | 0,1 bis 30 %, vorzugsweise 0,1 bis 15 % |
| festes Trägermittel | 99,5 bis 70 %, vorzugsweise 97 bis 85 % |

Die folgenden Beispiele erläutern die Erfindung weiter, ohne sie zu beschränken.

| Formulierungsbeispiele für Mischungen aus Herbiziden der Formel I und Safener der Formel IIc (% = Gewichtsprozent) | | | | |
|---|---|---|---|---|
| F1. Emulsionskonzentrate | a) | b) | c) | d) |
| Wirkstoffgemisch | 5 % | 10 % | 25 % | 50 % |
| Ca-Dodecylbenzolsulfonat | 6 % | 8 % | 6 % | 8 % |
| Ricinusöl-polyglykolether | 4 % | - | 4 % | 4 % |
| (36 Mol EO) Octylphenol-polyglykolether | - | 4 % | - | 2 % |
| (7-8 Mol EO) | | | | |
| Cyclohexanon | - | - | 10 % | 20 % |
| Arom. Kohlenwasserstoffgemisch C₉-C₁₂ | 85 % | 78 % | 55 % | 16 % |

Aus solchen Konzentraten können durch Verdünnung mit Wasser Emulsionen jeder gewünschten Konzentration hergestellt werden.

| F2. Lösungen | a) | b) | c) | d) |
|---|---|---|---|---|
| Wirkstoffgemisch 1-Methoxy-3-(3-methoxy- | 5 % | 10 % | 50 % | 90 % |
| propoxy)-propan | - | 20 % | 20 % | - |
| Polyethylenglykol MG 400 | 20 % | 10 % | - | - |
| N-Methyl-2-pyrrolidon | - | - | 30% | 10% |
| Arom. Kohlenwasserstoff-gemisch C₉-C₁₂ | 75 % | 60 % | - | - |

Die Lösungen sind zur Anwendung in Form kleinster Tropfen geeignet.

| F3. Spritzpulver | a) | b) | c) | d) |
|---|---|---|---|---|
| Wirkstoffgemisch | 5 % | 25 % | 50 % | 80 % |
| Na-Ligninsulfonat | 4 % | - | 3 % | - |
| Na-Laurylsulfat | 2 % | 3 % | - | 4 % |
| Na-Diisobutyl-naphthalinsulfonat | - | 6 % | 5 % | 6 % |
| Octylphenol-polyglykolether (7-8 Mol EO) | - | 1 % | 2 % | - |
| Hochdisperse Kieselsäure | 1 % | 3 % | 5 % | 10 % |
| Kaolin | 88 % | 62 % | 35 % | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| F4. Umhüllungs-Granulate | a) | b) | c) |
|---|---|---|---|
| Wirkstoffgemisch | 0.1 % | 5 % | 15 % |
| Hochdisperse Kieselsäure | 0.9 % | 2 % | 2 % |
| Anorg. Trägermaterial (Æ 0.1 - 1 mm) wie z.B. CaCO₃ oder SiO₂ | 99.0 % | 93 % | 83 % |

Der Wirkstoff wird in Methylenchlorid gelöst, auf den Träger aufgesprüht und das Lösungsmittel anschließend im Vakuum abgedampft.

| F5. Umhüllungs-Granulate | a) | b) | c) |
|---|---|---|---|
| Wirkstoffgemisch | 0.1 % | 5 % | 15 % |
| Polyethylenglykol MG 200 | 1.0 % | 2 % | 3 % |
| Hochdisperse Kieselsäure | 0.9 % | 1 % | 2 % |
| Anorg. Trägermaterial (Æ 0.1-1 mm) wie z.B. CaCO₃ oder SiO₂ | 98.0 % | 92 % | 80 % |

Der fein gemahlene Wirkstoff wird in einem Mischer auf das mit Polyethylenglykol angefeuchtete Trägermaterial gleichmäßig aufgetragen. Auf diese Weise erhält man staubfreie Umhüllungs-Granulate.

| F6. Extruder-Granulate | a) | b) | c) | d) |
|---|---|---|---|---|
| Wirkstoffgemisch | 0.1 % | 3 % | 5 % | 15 % |
| Na-Ligninsulfonat | 1.5 % | 2 % | 3 % | 4 % |
| Carboxymethylcellulose | 1.4 % | 2 % | 2 % | 2 % |
| Kaolin | 97.0 % | 93 % | 90 % | 79 % |

Der Wirkstoff wird mit den Zusatzstoffen vermischt, vermahlen und mit Wasser angefeuchtet. Dieses Gemisch wird extrudiert und anschließend im Luftstrom getrocknet.

| F7. Stäubemittel | a) | b) | c) |
|---|---|---|---|
| Wirkstoffgemisch | 0.1 % | 1 % | 5 % |
| Talkum | 39.9 % | 49 % | 35 % |
| Kaolin | 60.0 % | 50 % | 60 % |

Man erhält anwendungsfertige Stäubemittel, indem der Wirkstoff mit den Trägerstoffen vermischt und auf einer geeigneten Mühle vermahlen wird.

| F8. Suspensions-Konzentrate | a) | b) | c) | d) |
|---|---|---|---|---|
| Wirkstoffgemisch | 3 % | 10 % | 25 % | 50 % |
| Ethylenglykol | 5 % | 5 % | 5 % | 5 % |
| Nonylphenol-polyglykolether (15 Mol EO) | - | 1 % | 2 % | - |
| Na-Ligninsulfonat | 3 % | 3 % | 4 % | 5 % |
| Carboxymethylcellulose | 1 % | 1 % | 1 % | 1 % |
| 37%ige wäßrige Formaldehyd-Lösung | 0.2 % | 0.2 % | 0.2 % | 0.2 % |
| Silikonöl-Emulsion | 0.8 % | 0.8 % | 0.8 % | 0.8 % |
| Wasser | 87% | 79% | 62% | 38% |

Der feingemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

Es ist oft praktischer, den Wirkstoff der Formel I und den Mischungspartner der Formel llc einzeln zu formulieren und sie dann kurz vor dem Ausbringen im Applikator im gewünschten Mischungsverhältnis als "Tankmischung" im Wasser zusammenzubringen.

Die Fähigkeit der Safener der Formel llc, Kulturpflanzen vor der phytotoxischen Wirkung von Herbiziden der Formel I zu schützen, wird in den folgenden Beispielen veranschaulicht.

### Biologische Beispiele

### Beispiel B1: Post-emergente Anwendungen von Mischungen eines Herbizids der Formel I mit einem Safener der Formel IIc auf Getreide

Unter Gewächshausbedingungen wird Weizen in Kunststofftöpfen bis zum 2,5-Blattstadium angezogen. In diesem Stadium werden zum einen das Herbizid der Formel I allein als auch die Mischung des Herbizids mit einem Safener der Formel IIc auf die Testpflanzen appliziert. Die Applikation erfolgt als wäßrige Suspension der Prüfsubstanzen (Formulierungsbeispiele F3 a) und b)) mit 5001 Wasser/ha. 10 Tage nach der Applikation wird mit einer Prozentskala ausgewertet. Die erhaltenen Resultate zeigen, daß mit den Safenern der Formel llc die durch das Herbizid der Formel I verursachte Schädigung auf Weizen deutlich reduziert werden kann.

Beispiele für die selektive Wirkung der erfindungsgemäßen Mittel sind in der Tabelle B1 gegeben:

**Tabelle B1:**

| Pflanze: | Herbizid der Formel I: 15 g/ha | Herbizid der Formel I: 15 g/ha Safener Nr. 3.03: 4 g/ha |
|---|---|---|
| Weizen | 10 | 5 |
| Chenopodium | 90 | 90 |
| Emex | 80 | 90 |
| Raphanus | 80 | 80 |
| Setaria | 70 | 70 |

Dieselben Resultate werden erhalten, wenn man die Verbindung der Formel I und llc gemäß den Beispielen F1, F2 und F4 bis F7 formuliert.

### Beispiel B2: Post-emergente Anwendungen von Mischungen eines Herbizids der Formel I mit einem Safener der Formel llc auf Gerste

Unter Gewächshausbedingungen wird Gerste in Kunststofftöpfen bis zum 2,5-Blattstadium angezogen. In diesem Stadium werden zum einen das Herbizid der Formel I allein als auch die Mischung des Herbizids mit einem Safener der Formel llc auf die Testpflanzen appliziert. Die Applikation erfolgt als wäßrige Suspension der Prüfsubstanzen (Formulierungsbeispiele F3 a) und b)) mit 500l Wasser/ha. 10 Tage nach der Applikation wird mit einer Prozentskala ausgewertet. Die erhaltenen Resultate zeigen, daß mit dem Safener der Formel llc die durch das Herbizid der Formel I verursachte Schädigung auf Gerste deutlich reduziert werden kann.

Beispiele für die selektive Wirkung der erfindungsgemäßen Mittel sind in der Tabelle B2 gegeben:

**Tabelle B2:**

| Pflanze: | Herbizid der Formel I: 60 g/ha | Herbizid der Formel I: 60 g/ha Safener Nr. 3.03: 15 g/ha |
|---|---|---|
| Gerste | 40 | 30 |
| Chenopodium | 90 | 80 |
| Emex | 90 | 90 |
| Raphanus | 80 | 80 |
| Setaria | 80 | 80 |

Dieselben Resultate werden erhalten, wenn man die Verbindung der Formel I und llc gemäß den Beispielen F1, F2 und F4 bis F7 formuliert.

## Patentansprüche

1. Selektiv-herbizides Mittel, **dadurch gekennzeichnet, daß** es neben üblichen inerten Formulierungshilfsmitteln als Wirkstoff eine Mischung aus
a) einer herbizid-wirksamen Menge des Herbizids der Formel I 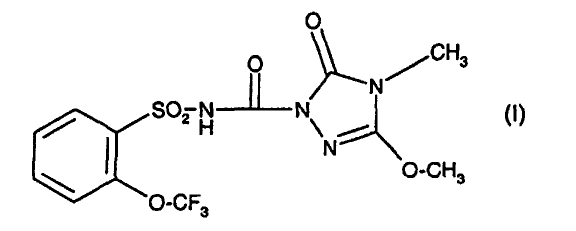 und
b) einer herbizid-antagonistisch wirksamen Menge eines Safeners der Formel llc 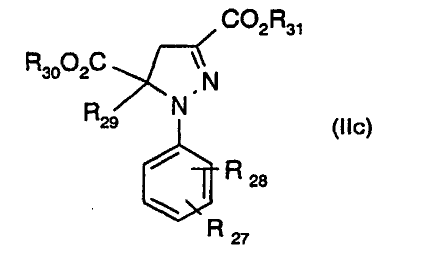
worin R₂₇ und R₂₈ unabhängig voneinander Wasserstoff oder Halogen und
R₂₉, R₃₀ und R₃₁ unabhängig voneinander C₁-C₄-Alkyl bedeuten; enthält.

2. Verfahren zum selektiven Bekämpfen von Unkräutern und Gräsern in Nutzpflanzenkulturen, **dadurch gekennzeichnet, daß** man die Nutzpflanzen, deren Samen oder Stecklinge oder deren Anbaufläche mit einer herbizid wirksamen Menge eines Herbizids der Formel I und einer herbizid-antagonistisch wirksamen Menge eines Safeners der Formel llc behandelt.

3. Verfahren gemäß Anspruch 2, **dadurch gekennzeichnet, daß** man Nutzpflanzenkulturen oder Anbauflächen für die Nutzpflanzenkulturen mit 0,001 bis 2 kg/ha eines Herbizids der Formel I gemäß Anspruch 1 und einer Menge von 0,001 bis 0,5 kg/ha eines Safeners der Formel llc gemäß Anspruch 1 behandelt.

4. Verfahren gemäß Anspruch 2, **dadurch gekennzeichnet, daß** es sich bei den Nutzpflanzenkulturen um Getreide oder Reis handelt.

## Claims

1. A selectively herbicidal composition which, in addition to comprising customary inert formulation adjuvants, comprises as active ingredient a mixture of
a) a herbicidally effective amount of the herbicide of formula I 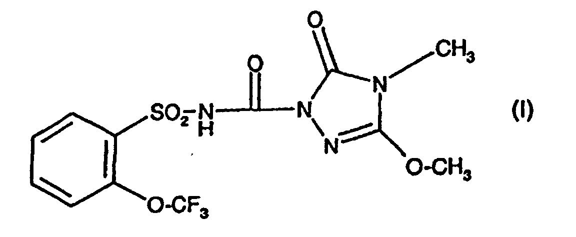 and
b) an amount, effective for herbicide antagonism, of a safener of formula llc 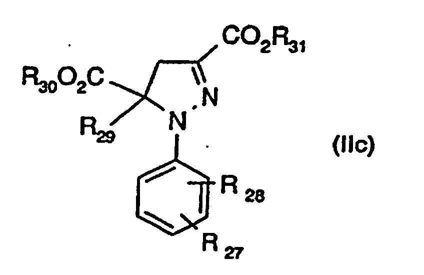
wherein R₂₇ and R₂₈ each independently of the other are hydrogen or halogen and
R₂₉, R₃₀ and R₃₁ each independently of the other are C₁-C₄alkyl.

2. A method of selectively controlling weeds and grasses in crops of useful plants, which comprises treating the useful plants or seeds or cuttings thereof or the area under cultivation with a herbicidally effective amount of a herbicide of formula I and an amount, effective for herbicide antagonism, of a safener of formula llc.

3. A method according to claim 2, wherein a crop of useful plants or an area of cultivation for the crop of useful plants is treated with from 0.001 to 2 kg/ha of a herbicide of formula I according to claim 1 and an amount of from 0.001 to 0.5 kg/ha of a safener of formula IIc according to claim 1.

4. A method according to claim 2, wherein the crop of useful plants is cereal or rice.

## Revendications

1. Agent herbicide sélectif **caractérisé en ce qu'**il contient, outre les agents de formulation inertes habituels comme substance un mélange composé de
a) une quantité herbicide efficace d'herbicide de formulé I 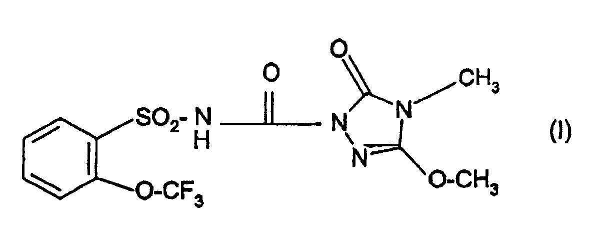 et
b) une quantité antagoniste herbicide efficace d'une antidote de formule IIc 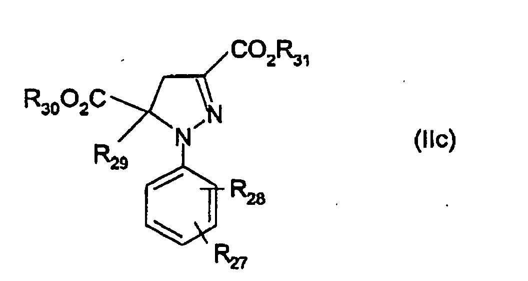
où R₂₇ et R₂₈ correspondent indépendamment l'un de l'autre à de l'hydrogène ou de l'halogène et
R₂₉, R₃₀ et R₃₁ correspondent indépendamment l'un de l'autre à un C₁-C₄-alkyle.

2. Procédé de lutte contre les mauvaises herbes et les graminées dans les cultures de plantes utilitaires, **caractérisé en ce qu'**on traite les plantes utilitaires, leurs graines ou leurs boutures ou leurs surfaces de culture avec une quantité herbicide efficace d'un herbicide de formule I et une quantité antagoniste herbicide efficace d'une antidote de formule IIc.

3. Procédé selon la revendication 2, **caractérisé en ce qu'**on traite les cultures de plantes utilitaires ou les surfaces de culture pour les cultures de plantes utilitaires avec 0,001 à 2 kg/ha d'un herbicide de la formule I selon la revendication 1 et une quantité de 0,001 à 0,5 kg/ha d'une antidote de la formule IIc selon la revendication 1.

4. Procédé selon la revendication 2, **caractérisé en ce qu'**il s'agit de céréales ou de riz dans les cultures de plantes utilitaires.
